# EUROPEAN PATENT APPLICATION

(11) **EP 2 246 471 A2**
(43) Date of publication of application: **03.11.2010**
(21) Application number: 10161100.2
(22) Date of filing: 27.04.2010
(51) Int. Cl.: D21G 1/00, D21F 5/02, D21G 1/02

(54) **Method for controlling the runnability of a fiber web machine**

(30) Priority: 29.04.2009 FI 20095475
(71) Applicant: Metso Paper Inc., 00130 Helsinki (FI)
(72) Inventor: Suistio, Juha, 90440 Kempele (FI)
(74) Representative: Schmid, Wolfgang

(57) **Abstract**

A method and device for controlling the runnability of a fiber web machine, where a certain layer thickness is removed from the outer surface of the shell of the roll of a fiber web machine, such as a drying cylinder, and where the layer thickness removed from the shell of the roll is replaced with a composite material. The replaced layer thickness is selected considering the vibration-influencing properties of the removed material and of the replacing material so that the critical speed of a roll created by replacing the removed layer thickness with a composite material is suited to the desired running speed of the said roll.

## Description

### FIELD OF INVENTION

The invention is related to controlling the runnability of a fiber web machine. In particular, but not exclusively, the invention is related to controlling roll vibration in a fiber web machine.

### BACKGROUND OF INVENTION

Fiber web machines produce and process fiber webs, such as paper and board. The fiber web is supported, dried, turned and pressed by means of various rolls. The rolls typically have axle journals at the ends of the roll, with the rotating rolls supported by the axle journals to the frame of the fiber web machine, and the rolls also typically have a shell which touches the fiber web or wire. As an example, the roll of a paper machine can have a diameter of 1 m, and the shell of the roll can be for example 7 m long. The speed of rotation of the roll depends on the roll diameter and web speed. While the roll rotates, it vibrates because of reasons which are well known as such. These reasons include the speed of rotation, length, mass and rigidity of the roll. The irregularity of the web, the inhomogeneity of the roll surface and flaws in the geometry of the roll surface are one source of the vibration. These reasons can cause vibrations especially in press rolls and on the calender.

Roll vibration has negative impacts. A roll vibrating in the press section or on the calender can cause unevenness in the grammage profile in the machine direction, and in conjunction with a size press, vibration can cause uneven sizing. In a printing machine, roll vibration may cause, depending on the application, for example uneven print quality or susceptibility to web breaks. Vibration also stresses the supporting, drive unit and bearing unit of the roll, exposes the web to web breaks and may limit the maximum running speed of the fiber web machine. This is why the goal is to eliminate roll vibration or at least avoid it as much as possible.

The objective is to maximize the capacity of fiber web machines in order to improve economic efficiency so that a maximum output can be achieved within acceptable quality and runnability in general. The running speed of a fiber web machine can be increased until sufficient quality is no longer achieved because of the increased speed or until the increased speed causes so much more wastage and/or downtime that it is not worth while increasing the speed. A fiber web machine often has individual bottlenecks such as a maximum speed determined by the natural vibration frequency of a roll (critical speed) or even half of the critical speed corresponding to the natural vibration frequency (semicritical speed), which may also cause problems. In this case, the rolls in question must be replaced with new rolls with a higher critical speed.

Nowadays, there are composite rolls which have several different materials in layers in the shell of the roll. The body of the core of the shell is made of steel, on top of which there is an intermediate layer of for example fiberglass to dampen the vibration coming from the surface of the shell, and on top of the intermediate layer there is a wear surface of for example carbon fiber. Composite rolls can be manufactured to be essentially of lighter weight than a conventional roll made of steel, in which case their natural vibration frequency is greater than earlier, and problems (deflection bending, inertia of speed changes) caused by the mass of the roll itself can be avoided. Probably the biggest disadvantage of composite rolls is their price. Even though the composite structure would enable avoiding changes in the surrounding parts to fit the roll into place, the price of a new composite roll has sometimes restricted the opportunities to replace old steel rolls with composite rolls.

EP1134441 (B1) provides an example of a bendable composite roll, and WO 2008/155442 describes a method for the manufacture of a composite roll.

The object of the invention is to avoid or at least reduce problems caused by roll vibration in the runnability of a fiber web machine.

### SUMMARY

In accordance with one first aspect of the invention, the invention provides a method for controlling the runnability of a fiber web machine, with the method having the following characteristic features:
a certain layer thickness is removed from the outer surface of the shell of the roll of a fiber web machine;
the layer thickness removed from the shell of the roll is replaced with a composite material;
the certain layer thickness is selected considering the vibration-influencing properties of the removed material and of the replacing material so that the critical speed of a roll created by replacing the removed layer thickness with a composite material is suited to the desired running speed of the said roll.

By replacing a certain layer thickness on the outer surface of the shell of a roll with a composite material, the vibration properties of the roll can be changed so that the vibration of the roll can decrease significantly and/or the running speed of the roll can be raised to the desired running speed without compromising runnability too much. By replacing a certain layer thickness, the running speed of the roll can even be raised without impairing runnability.

The said composite material can comprise a carbon fiber layer.

The said composite material can comprise a fiberglass layer. The fiberglass layer can be located between the outer surface of the steel shell and the carbon fiber layer.

The said composite material can comprise aramid fibers. Aramid fibers can be used for controlling the vibration damping properties of the shell.

The said vibration-influencing properties can comprise density, modulus of elasticity, vibration damping properties and/or a quantity describing the uniformity of the structure characteristic of the material.

In addition to the removed layer thickness, replacing a certain layer thickness with a composite material can comprise the replacement of the wear layer, which has worn from the roll earlier or which has been removed in order to recondition the roll, with a composite material in order to form a new wear layer. The new wear layer can extend essentially throughout the certain layer thickness. Alternatively, the new wear layer can be as thick as the removed wear layer or thicker than the removed wear layer. The new wear layer can be formed to be different from the layer located between the new wear layer and the steel shell remaining in the core of the roll so that a certain wear resistance and/or desired properties of the surface which touches the fiber web are given to the wear layer.

The said properties of the surface which touches the fiber web can comprise one or more of the following properties: smoothness, thermal conductivity, heat resistance, how the web comes off the roll, receptivity of the material applied to the surface, corrosion resistance, electrical conductivity, antistaticity, elasticity, impact resistance, printability, and resistance to temperature variations.

The said certain layer thickness can be removed by a turning machine.

Making the shell of a roll thinner may weaken the structure of the roll so that if the removed layer thickness is not replaced with a composite material, the roll would not be sufficiently rigid to support is center section in a sufficiently rigid manner, but when the roll is formed to its original diameter by means of the composite material, the rigidity of the roll is sufficient.

The inventor has realized that in the design of the shell of rolls with a steel shell, it is necessary to create sufficient rigidity for a roll which is considerably heavier than a roll with the composite structure. By replacing the certain layer thickness of steel on the outer surface of the shell of the roll with a lighter composite structure, the total mass of the roll can be reduced significantly.

The fiber web machine can be for example a paper machine, board machine, pulp-drying machine, tissue machine, or finishing machine such as calender or coating machine, or web processing machine such as printing machine.

The embodiments of the present invention are described or have been described only in conjunction with some aspect or aspects of the invention. A professional in the field understands that any embodiment of any aspect of the invention can be applied in the same aspect and other aspects of the invention on its own or in combination with the other embodiments.

### BRIEF DESCRIPTION OF FIGURES

The invention is described below in way of example by making reference to the enclosed figures.
Figure 1 is a cross section of the roll of a fiber web machine, with a steel shell in the roll; and
Figure 2 is a cross section of a lightened roll, which is formed from the roll in Figure 1 by removing a certain material thickness of steel from the outer surface of the shell of the roll depicted in Figure 1; and
Figure 3 is a cross section of a composite roll, which is formed by installing a composite layer on top of the steel shell of the roll depicted in Figure 2; and
Figure 4 is a schematic view presenting in more detail the component layers available for the composite layer depicted in Figure 3.

### DETAILED SPECIFICATION

In the below specification, similar reference numbers refer to similar parts. It is to be noted that the figures presented are not completely on scale and that they primarily only serve the purpose of illustrating the embodiments of the invention.

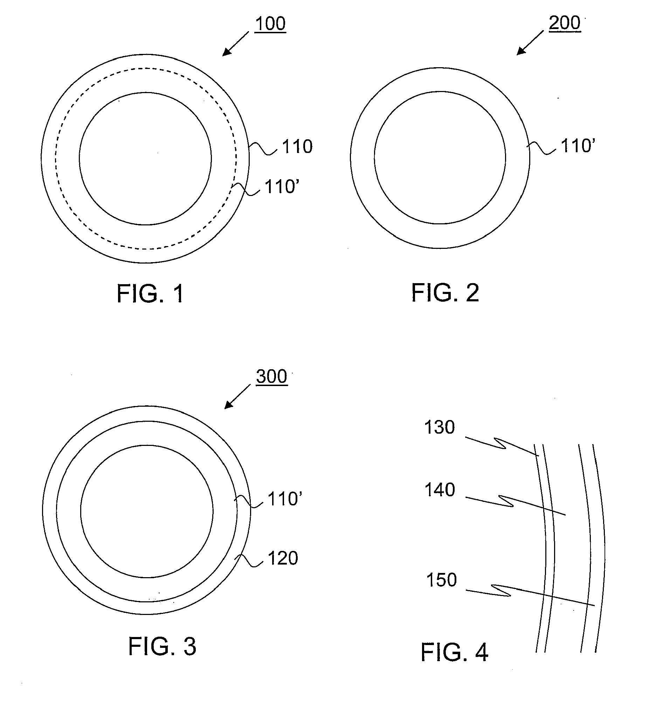

Figure 1 is a cross section of the roll 100 of a fiber web machine, with a steel shell in the roll. The roll 100 comprises a metal shell 110, the outer diameter of which is 1000 mm and shell thickness 20 mm. A heat carrier medium, such as water vapor, water or oil, can be introduced inside the shell from the end of the roll in order to heat and/or cool the roll.

Figure 2 is a cross section of a lightened roll 200, which is formed from the roll in Figure 1 by removing a certain material thickness of steel from the outer surface of the shell 110 of the roll depicted in Figure 1, for example 5 to 50%, preferably 10 to 40%, in this case 25% or 5 mm. The lightened steel shell is referred to by the reference number 110'.

Figure 3 is a cross section of a composite roll 300, which is formed by installing a composite layer 120 on top of the lightened steel shell 110' of the roll 200 depicted in Figure 2. The composite layer 120 comprises a fiberglass layer 130, carbon fiber layer 140 and a wear surface layer or coating 150. The wear surface layer 150 can be arranged on the surface of the roll 100 for example when the roll 100 is a soft calender roll, a guide roll or a size press roll. The fiberglass layer 130 can reduce the tension between the steel and carbon fiber layers resulting from the different coefficients of heat expansion of these two materials.

The component layers available for the composite layer are presented in more detail in Figure 4.

The fiberglass layer, carbon fiber layer and/or wear surface layer can comprise several layers formed in the same stage or in different stages. As an example, in the manufacture of the fiberglass layer and carbon fiber layer, fiber orientation can be used to influence the properties of the layer formed.

The wear surface layer 150 can be manufactured in conjunction with the manufacture of the composite layer 120 or after the composite layer 120 has already been manufactured in a stage of its own. The wear surface layer can be manufactured using rotational casting or winding (for example when using a composite material).

The wear surface layer 150 can be formed in conjunction with the forming of the composite layer for example so that the material of the composite layer changes gradually towards the outer surface.

For example rubber, polyurethane or epoxy, with or without fiber reinforcement, can be used in the wear surface layer. The wear surface layer can be a hot-sprayed layer.

The thickness of the composite layer can be essentially similar to the thickness of the removed steel layer. It is to be understood that the roll 100 may already have been reconditioned by grinding or turning and that the diameter of the roll with the composite layer 120 may also be greater than the diameter of the roll 100 depicted in Figure 1.

The composite layer can be used for changing the vibration properties of the roll so that the vibration of the roll can decrease significantly and/or the running speed of the roll can be raised to the desired running speed without compromising runnability too much. By replacing a certain layer thickness, the running speed of the roll can even be raised without impairing runnability. The composite layer can be used for changing for example the density or modulus of elasticity of the shell of the roll or the uniformity of the structure of the material.

Certain desired properties can be arranged on the surface, which touches the fiber web, of the composite roll 300 depicted in Figure 3. Such properties include smoothness, thermal conductivity, heat resistance, how the web comes off the roll, receptivity of the material applied to the surface, corrosion resistance, electrical conductivity, antistaticity, elasticity, impact resistance, printability, and resistance to temperature variations. The surface which touches the fiber web can be composed of a carbon fiber layer 140 or of a wear surface layer 150.

The invention can especially be applied in conjunction with a paper machine or board machine, for example in the guide rolls in the dryer section, but also in conjunction with finishing machines and other machines where a fiber web runs.

In one embodiment of the invention, a coated calender roll is converted for a higher running speed so that the coating on the roll and some of the outer surface of the steel shell of the roll are removed, and a composite layer and a new coating are installed to replace the removed steel layer and coating.

Table I presents an example of changes in the properties of a roll shell, when the shell of a roll with steel shell is made lighter by replacing steel with carbon fiber which has a modulus of elasticity of 85 GPa or 130 GPa.

The outer diameter of the shell of the roll in Table 1 is 1000 mm, inner diameter 950 mm, length of shell 9200 mm and length of nip 9000 mm. The modulus of elasticity of steel is 210 kN/mm², or 210 GPa. The density of steel is 7.5 kg/dm³ and the density of carbon fiber is 1.8 kg/dm³.

**Table I Example of changes in the properties of a roll shell, when the shell of a roll with steel shell is made lighter by replacing steel with carbon fiber which has a modulus of elasticity of 85 GPa or 130 GPa.**

| | | | | |
|---|---|---|---|---|
| Removed steel layer, mm | 5 | 10 | 5 | 10 |
| Added carbon fiber (E=85 GPa), mm | 5 | 10 | 10 | 15 |
| Properties vs. steel roll: | | | | |
| Inertia, % | 87.36 | 75.09 | 96.22 | 83.95 |
| Weight, % | 82.05 | 64.28 | 86.99 | 69.23 |
| Natural frequency, % | 103.19 | 108.08 | 105.17 | 110.12 |
| Deflection, % | 94.18 | 86.22 | 90.59 | 82.94 |
| | | | | |
| Removed steel layer, mm | 5 | 10 | 5 | 10 |
| Added carbon fiber (E=130 GPa), mm | 5 | 10 | 10 | 15 |
| Properties vs. steel roll: | | | | |
| Inertia, % | 91.91 | 84.06 | 105.46 | 97.61 |
| Weight, % | 82.05 | 64.28 | 86.99 | 69.23 |
| Natural frequency, % | 105.84 | 114.35 | 110.10 | 118.74 |
| Deflection, % | 89.52 | 77.02 | 82.65 | 71.33 |

Table I indicates that when steel is replaced with carbon fiber on the outer surface of the shell of a roll, the inertia of the roll decreases on a ratio to the amount of steel replaced with carbon fiber. On the other hand, the weight of the shell decreases more. The deflection, in other words the bending caused by the mass of the roll itself, is therefore considerably smaller with all the values given in the table than the deflection of the original roll. With the values given in the table, the more the shell is made lighter by means of carbon fiber, the greater the improvement in deflection. Making the shell lighter is also reflected clearly in an elevated natural frequency of the roll. As an example, the natural frequency grows by more than 14% when a steel layer of 100 mm in the shell is replaced with a carbon fiber layer with a corresponding thickness. The replacing carbon fiber layer may even be thicker than the removed steel layer. As an example, a carbon fiber layer of 15 mm can be installed in the place of a steel layer of 10 mm, in which case the natural frequency increases by almost 19%. The increase in diameter can be compensated for by making the wear surface layer, or coating 150, thinner.

The above specification provides non-limiting examples of some embodiments of the invention. It is clear for a professional in the field that the invention is not limited to the details presented, but the invention can also be implemented using other equivalent methods. Although exemplified by a steel shell it is to be understood that a roll shell made of any metal material can be used in the invention.

Some features of the presented embodiments can be utilized without the use of the other features. The above specification as such must only be considered as a description of the principles of the invention, not as a description limiting the invention. The scope of protection of the invention is hence only limited by the enclosed patent claims.

## Claims

1. A method for controlling the runnability of a fiber web machine, **characterized in that**:
a certain layer thickness is removed from the outer surface of the shell (110) of the roll (100, 300) of the fiber web machine;
the layer thickness removed from the shell 110) of the roll (100, 300) is replaced with a composite material (120);
the certain layer thickness is selected considering the vibration-influencing properties of the removed material and of the replacing material so that the critical speed of a roll (100, 300) created by replacing the removed layer thickness with a composite material is suited to the desired running speed of the said roll (100, 300).

2. A method as claimed in claim 1, **characterized in that** the said composite material (120) comprises a carbon fiber layer.

3. A method as claimed in claim 1, **characterized in that** the said composite material (120) comprises a fiberglass layer.

4. A method as claimed in any of the above claims, **characterized in that** the fiberglass layer is situated between the outer surface of the shell and the carbon fiber layer.

5. A method as claimed in any of the above claims, **characterized in that** the said vibration-influencing properties comprise at least one of the following:
density, modulus of elasticity and/or a quantity describing the uniformity of the structure characteristic of the material.

6. A method as claimed in any of the above claims, **characterized in that** in addition to the removed layer thickness, replacing a certain layer thickness with a composite material comprises the replacement of the wear layer, which has worn from the roll earlier or which has been removed in order to recondition the roll, with a composite material in order to form a new wear layer.

7. A method as claimed in any of the above claims, **characterized in that** the new wear layer extends essentially throughout the certain layer thickness.

8. A method as claimed in any of the above claims, **characterized in that** the new wear layer is at least as thick as the removed wear layer.

9. A method as claimed in any of the above claims, **characterized in that** the said properties of the surface which touches the fiber web can comprise one or more of the following properties: smoothness, thermal conductivity, heat resistance, how the web comes off the roll, receptivity of the material applied to the surface, corrosion resistance, electrical conductivity, antistaticity, elasticity, impact resistance, printability, and resistance to temperature variations.

10. A method as claimed in any of the above claims, **characterized in that** the said certain layer thickness is removed by a turning machine.

11. A modernized roll (100; 300) of a fiber web machine, **characterized in that**:
a certain layer thickness is removed from the outer surface of the shell (110) of the roll (100; 300); and
the layer thickness removed from the shell (110) of the roll (100, 300) is replaced with a composite material (120);
the certain layer thickness is selected considering the vibration-influencing properties of the removed material and of the replacing material so that the critical speed of a roll (100; 300) created by replacing the removed layer thickness with a composite material is suited to the desired running speed of the said roll (100; 300).
